# FASCICULE DE BREVET EUROPEEN

(11) **EP 0 823 917 B1**
(45) Date de publication et mention de la délivrance du brevet: **25.08.1999**
(21) Numéro de dépôt: 96919873.8
(22) Date de dépôt: 06.05.1996
(51) Int. Cl.: C08F 8/12, C08F 6/00

(54) **PROCEDE DE PURIFICATION D'ALCOOL POLYVINYLIQUE**
VERFAHREN ZUR REINIGUNG VON POLYVINYLALKOHOL
POLYVINYL ALCOHOL PURIFICATION PROCESS

(30) Priorité: 05.05.1995 FR 9505893
(43) Date de publication de la demande: 18.02.1998
(73) Titulaire: ACETEX CHIMIE, 92082 Paris La Défense 2 (FR)
(72) Inventeur: CHARRIN, Jean-Jacques, F-69003 Lyon (FR); VACHET, François, F-69150 Decines (FR)
(74) Mandataire: Giraud, Françoise
(86) Numéro de dépôt international: FR9600686
(87) Numéro de publication internationale: WO9634897

(56) Documents cités:
- DE-A- 1 620 946
- FR-A- 1 360 102
- GB-A- 933 104
- US-A- 3 544 538
- CHEMICAL ABSTRACTS, vol. 93, no. 6, Août 1980 Columbus, Ohio, US; abstract no. 47795y, "POLY(VINYL ALCOHOL) WITH IMPROVED DISPERSIBILITY" page 43; colonne 2; XP002011489 & JP,A,80 043 158 (NIPPON SYNTHETIC CHEMICAL INDUSTRY CO., LTD.) 26 Mars 1980

## Description

La présente invention a pour objet un procédé de purification d'alcool polyvinylique, ainsi qu'un alcool polyvinylique sous forme d'écailles de quelques millimètres de côté, ou sous forme d'une poudre dont la granulométrie moyenne des particules est avantageusement supérieure à 600 µm, et présentant des teneurs en méthanol et en acétate de méthyle faibles.

L'alcool polyvinylique est un polymère obtenu par réaction d'un ester polyvinylique, en général l'acétate de polyvinyle, avec un alcool qui peut être l'éthanol, ou, pour une exploitation industrielle, le méthanol. La réaction est mise en oeuvre avec un catalyseur qui peut être un catalyseur basique tel que l'hydroxyde de sodium, ou encore avec un catalyseur acide comme l'acide sulfurique ou l'acide chlorhydrique. La catalyse basique est préférée pour une exploitation industrielle.

Lorsque l'alcool (appelé par la suite APV) est préparé de manière discontinue, on obtient le polymère sous une forme solide, par précipitation dans l'alcool mis en oeuvre lors de l'alcoolyse, et dans l'ester libéré durant cette même réaction ; la précipitation a lieu en général dans un malaxeur. On effectue ensuite une étape de neutralisation du catalyseur résiduel, puis de lavage du polymère, que l'on sèche par la suite.

Lorsque le procédé est mis en oeuvre en continu, le produit issu de la réaction est tout d'abord mis sous la forme d'écailles, majoritairement sous forme d'écailles irrégulières de 2 à 6 mm et d'une épaisseur d'environ quelques dizièmes de millimètres, au moyen d'un broyeur humide, puis on procède à une étape de neutralisation du catalyseur résiduel suivie d'une étape de lavage. A l'issue de ces opérations, on sépare le polymère sous forme solide que l'on sèche par tout moyen connu. Une fois le produit séché, on effectue en général un broyage du polymère séché.

Habituellement, on constate que la granulométrie des particules d'APV obtenues par le premier procédé est plus fine, inférieure à 200 µm, qu'avec les procédés mis en oeuvre de manière continue. En effet, par les procédés continus, la granulométrie des particules après broyage est supérieure à 600 µm, même si a priori rien n'empêche d'obtenir par cette voie une granulométrie plus fine. Il est à noter que des particules présentant une taille élevée sont intéressantes en ce sens qu'elles présentent de meilleures propriétés d'usage.

C'est vers les étapes de séchage précitées que la présente invention est dirigée. En effet, quelle que soit la méthode mise en oeuvre, l'APV issu de la réaction d'alcoolyse renferme une quantité importante de solvants présents lors de la réaction, tels que l'alcool utilisé et l'ester libéré. Or il est nécessaire d'éliminer ces solvants en vue d'obtenir des teneurs de l'ordre de quelques pour-cent.

Cependant, il n'est pas possible de sécher l'APV sans précaution car ce produit est sensible à la température. En effet, s'il est soumis à une température élevée, supérieure ou de l'ordre de 100°C, pendant une durée importante, on constate alors que certaines de ses caractéristiques, comme la solubilité dans l'eau, le taux d'hydrolyse, la viscosité et la coloration, évoluent, ce qui est à éviter.

Une première méthode évidente pour éliminer ces solvants consiste simplement à chauffer l'APV à une température plus faible que celle à partir de laquelle le polymère commence à se dégrader. Cependant, un tel procédé n'est pas rentable car baisser la température revient à augmenter de façon importante la durée du séchage. Par ailleurs, ce type de procédé ne permet pas d'éliminer d'une façon suffisante l'alcool présent.

Pour résoudre ce problème de rentabilité sans aller au détriment des caractéristiques du polymère, il a été proposé d'effectuer la purification de l'APV en effectuant un traitement thermique de ce dernier sous une atmosphère présentant une humidité relative en eau d'au moins 8 %, et plus particulièrement inférieure à 15 %. Ainsi, le séchage est mis en oeuvre à des températures comprises entre 90 et 115°C, de préférence sous vide de manière à accélérer encore la durée d'évacuation des solvants, qui se trouve être de l'ordre de quelques heures.

Cependant, cette méthode est plus particulièrement appropriée pour le séchage de particules d'APV de faible taille. En effet, dans ce cas, la diffusion à l'intérieur des particules est facilitée par rapport à des particules de forte granulométrie, rendant de ce fait plus aisée l'élimination des solvants. Ainsi, lorsque l'on met en oeuvre ce type de séchage sur un APV obtenu par une méthode en continu, avec une humidité relative telle que mentionnée ci-dessus et à pression réduite, l'APV résultant présente une teneur supérieure à 1% en méthanol et en ester.

Une autre méthode plus récemment proposée consiste à mélanger l'APV à traiter avec de l'eau liquide dans une quantité de 10-30 % en poids d'eau par rapport au polymère, de façon à obtenir un gonflement des particules. Les particules sont par la suite soumises à un traitement thermique dans un sécheur vertical. L'alcool polyvinylique est introduit en tête du sécheur et passe dans une première zone entourée d'une double enveloppe chauffée par de l'eau. La température dans cette zone est l'un des points essentiels de ce procédé. Il est en effet précisé que si cette température était trop élevée, c'est-à-dire si le moyen de chauffage de cette zone était de la vapeur et non plus de l'eau, l'eau serait évaporée avant d'avoir pu agir sur le polymère avec pour conséquence que l'élimination des solvants ne serait pas suffisante. Après le passage dans cette première zone, l'APV est entraîné dans deux autres parties, chauffées au moyen d'une double enveloppe comprenant de la vapeur, de manière à évacuer l'eau qui est emprisonnée dans les particules de polymère.

Ce procédé est efficace mais la durée de l'opération est de quelques heures, et il nécessite la mise en oeuvre d'un sécheur vertical. En outre, ce procédé ne permet pas de traiter des polymères comprenant moins de 10 % en poids de solvant par rapport au poids sec d'APV.

Par ailleurs, le brevet FR-A-1 360 102 décrit un procédé d'obtention d'alcool polyvinylique présentant des propriétés de solubilité dans l'eau et d'empâtage améliorées. Le traitement décrit dans ce document consiste à soumettre un APV présentant un taux d'humidité inférieur à 10 % et pratiquement exempt de solvants organiques à un chauffage sous vapeur d'eau. Dans les exemples de ce brevet, il est dit que l'APV est chauffé avant la mise en contact avec de la vapeur d'eau saturée.

D'autre part, le brevet GB-A- 933 104 décrit un procédé de purification d'APV de saponification selon lequel on lave l'APV avec du méthanol et on élimine les traces de méthanol dans une opération de fractionnement.

La présente invention a pour but de proposer une méthode de purification de l'alcool polyvinylique simple de mise en oeuvre, économique et qui peut être rapide de surcroît.

Par ailleurs, l'invention a pour objet un alcool polyvinylique présentant des teneurs en solvants très faibles, et se présentant sous forme d'écailles dont les côtés mesurent au plus 10mm, ou sous forme d'une poudre dont la granulométrie est élevée.

Ainsi, la présente invention consiste à purifier un alcool polyvinylique en le soumettant à un traitement thermique sous agitation et sous une atmosphère non saturée en eau et présentant un titre massique en vapeur d'eau compris entre 20 et 100%, et en effectuant le traitement à une pression d'au moins 0,5 bar absolus.

Le procédé selon l'invention est particulièrement approprié pour obtenir un APV présentant une teneur en alcool inférieure à 1 % en poids par rapport au poids d'APV humide, ainsi qu'une teneur en ester inférieure à 1 % par rapport à la même référence. Plus particulièrement l'alcool est le méthanol, l'ester est l'acétate de méthyle.

De manière particulièrement avantageuse, la présente invention permet d'obtenir un APV présentant une teneur en alcool inférieure à 0,5 % en poids par rapport au poids d'APV humide. Elle permet d'obtenir par ailleurs, de manière avantageuse, un APV avec une teneur en ester inférieure à 0,5 %.

La présente invention a de même pour objet un alcool polyvinylique sous forme d'écailles dont les côtés mesurent au plus 10 mm, et présentant des teneurs en alcool, et plus particulièrement en méthanol inférieure à 1 % et en ester, plus particulièrement en acétate de méthyle, inférieure à 1 %, ces valeurs étant exprimées en poids par rapport à l'APV humide.

L'invention concerne de même un alcool polyvinylique présentant une granulométrie moyenne avantageusement supérieure à 600 µm et présentant des teneurs en alcool, et plus particulièrement en méthanol inférieure à 1 % et en ester, plus particulièrement en acétate de méthyle, inférieure à 1 %, ces valeurs étant exprimées en poids par rapport à l'APV humide.

Il a été trouvé d'une façon surprenante que le polymère traité dans les conditions de la présente invention, c'est-à-dire notamment en présence de quantités élevées de vapeur d'eau, n'était pas solubilisé.

Par ailleurs, le procédé selon l'invention permet de purifier l'alcool polyvinylique de manière à atteindre des teneurs en solvants très faibles, en une durée de traitement qui peut être plus courte qu'une heure. Par ailleurs, ce procédé ne nécessite pas l'emploi d'un appareillage particulier.

Mais d'autres avantages et caractéristiques du procédé selon l'invention apparaîtront plus clairement à la lecture de la description et des exemples qui vont suivre.

L'APV que l'on peut traiter par le procédé selon l'invention peut présenter n'importe quel degré de polymérisation et/ou de taux d'alcoolyse.

Le procédé selon l'invention convient particulièrement à la purification d'APV présentant un taux d'alcoolyse compris entre 70 et 99 %, plus particulièrement compris entre 95 et 99 %.

Par ailleurs, le procédé de l'invention permet de traiter l'APV directement issu du procédé, après neutralisation du catalyseur résiduel. Il est de même possible de traiter selon le procédé de l'invention, un APV plus ou moins séché par des méthodes conventionnelles. Ainsi, à titre illustratif, on peut traiter un APV comprenant entre 3 et 80 % de solvants, exprimé par rapport au poids de polymère humide.

Le procédé selon l'invention est approprié pour purifier un APV provenant de méthodes de préparation en discontinu et en continu. Cependant, la méthode est particulièrement bien adaptée au séchage d'APV issu de procédés continus, pour lesquels le problème de séchage est plus critique du fait de la taille importante des particules d'APV à sécher.

Selon une première caractéristique du procédé selon l'invention, le traitement a lieu en présence d'une atmosphère comprenant de la vapeur d'eau et présentant un titre massique en vapeur d'eau compris entre 20 et 100%. Par titre en vapeur d'eau, on entend le rapport de la masse de vapeur d'eau et de la masse totale de vapeur d'eau et de gaz diluants.

Plus particulièrement, le titre massique en vapeur d'eau est compris entre 40 et 100%. De préférence, le titre massique en vapeur d'eau est compris entre 60 et 100 %.

L'atmosphère sous laquelle est mis en oeuvre le procédé selon l'invention comprend de la vapeur d'eau et éventuellement un gaz diluant tel que l'air, l'azote, ou encore tout autre gaz dans la mesure où il est inerte vis-à-vis de l'APV dans les conditions de traitement.

Selon une seconde caractéristique de l'invention, l'atmosphère est non saturée en eau. La saturation est définie comme étant la limite entre un milieu monophasique contenant de la vapeur d'eau et un milieu diphasique contenant à la fois des gouttelettes d'eau et de la vapeur d'eau. Cette définition est valable aussi bien pour de l'eau pure que pour un mélange d'eau et d'un gaz diluant.

L'atmosphère sous laquelle est réalisé le traitement selon l'invention peut se rapprocher de la saturation sans toutefois l'atteindre.

Selon une première variante, on effectue le traitement avec de la vapeur d'eau et un gaz diluant. Dans ce cas, les caractéristiques de température et de pression sont choisies de manière à ce que l'atmosphère n'ait pas atteint la limite de saturation.

Selon une seconde variante, on utilise de la vapeur d'eau seulement. Dans ce cas, la vapeur est surchauffée afin de ne pas atteindre la limite de saturation dans les conditions de température et de pression.

Selon une autre caractéristique de la présente invention, l'opération a lieu sous agitation. Plus particulièrement, l'agitation est telle que le polymère se trouve sous la forme d'une suspension dans l'atmosphère gazeuse, dont les particules sont indépendantes.

Il est à noter qu'il est important de minimiser, voire d'éviter la condensation de l'eau sur les particules d'APV, de façon à éviter une solubilisation partielle de l'APV qui pourrait entraîner un collage des particules entre elles, rendant le produit inutilisable par la suite.

En outre l'agitation doit de préférence être suffisante pour permettre un bon contact solide - gaz, afin d'éliminer de manière optimale les solvants concernés.

La condensation d'un film d'eau sur les particules d'APV peut de même être évitée en contrôlant la température de l'APV au début du traitement. Ainsi, la température du produit au début du traitement est plus particulièrement voisine du point de rosée de l'atmosphère de traitement. De préférence, cette température est supérieure au point de rosée de l'atmosphère de traitement.

De plus, il est à noter que pour éviter tout problème de dégradation du polymère, il est préférable que la température de l'APV en cours de traitement ne dépasse pas 130°C.

Selon une variante de l'invention, la quantité de vapeur d'eau entrant en contact avec l'APV (chauffé comme indiqué auparavant) pendant le traitement, est comprise entre 0,2 et 0,8 kg par kilogramme d'APV sec. De préférence, cette quantité est comprise entre 0,4 et 0,6 kg par rapport à la même référence.

Le procédé selon l'invention peut donc avoir lieu dans n'importe quel type d'appareillage connu de l'homme du métier comprenant des moyens d'agitation mécaniques. On peut de même mettre en oeuvre des appareillages dans lesquelles l'agitation est réalisée au moyen de flux gazeux, comme c'est le cas notamment pour les lits fluidisés, les lits transportés ou encore les lits à jets.

Plus particulièrement, on effectue le traitement selon l'invention sous une agitation pour laquelle le nombre de Froude est compris entre 0,04 et 3, et de préférence compris entre 0,06 et 2,5.

Il est rappelé que le nombre de Froude correspond au rapport suivant : (π.N)².D / g ; formule dans laquelle N représente le nombre de tours par seconde, D le diamètre de l'agitateur et g l'accélération de la pesanteur.

La durée du procédé selon l'invention est avantageusement réduite par rapport aux procédés antérieurs connus puisqu'il est possible d'obtenir les teneurs désirées en solvant en une période de traitement aussi courte qu'un quart d'heure à une heure. Bien entendu, des durées plus importantes ne sont pas exclues.

En fait, la durée du traitement peut être adaptée d'une manière très avantageuse, en fonction du type d'appareillage que l'on met en oeuvre pour le séchage de l'APV.

Ainsi, selon une première variante particulièrement avantageuse de la présente invention, la durée du traitement de l'APV est comprise entre un quart d'heure et 2 heures, plus particulièrement entre une demi-heure et une heure. Selon cette variante, le séchage est effectué sous une agitation plutôt importante, c'est-à-dire correspondant à un nombre de Froude compris entre 0,5 et 3, et de préférence entre 0,5 et 2,5.

En outre, le débit d'introduction de la vapeur d'eau non saturée est tel que la quantité de vapeur mise en contact avec le produit chauffé est comprise entre 0,2 et 0,8 kg par kilogramme d'APV sec, et de préférence comprise entre 0,4 et 0,6 kg par rapport à la même référence.

Selon une seconde variante de la présente invention, le traitement de l'APV est effectué pendant une durée plus importante, par exemple de 2 à 4 heures. Dans ce cas, le traitement selon l'invention peut être mis en oeuvre sous une agitation plus faible, c'est-à-dire correspondant à un nombre de Froude compris entre 0,04 et 0,5, de préférence compris entre 0,06 et 0,5.

Le débit d'introduction de la vapeur d'eau non saturée est déterminé par l'homme du métier de manière à ce que la quantité de vapeur mise en contact avec le produit chauffé soit comprise entre 0,2 et 0,8 kg par kilogramme d'APV sec, et de préférence comprise entre 0,4 et 0,6 kg par rapport à la même référence.

La pression à laquelle est effectuée l'opération est d'au moins 0,5 bar absolus. Plus particulièrement, elle est comprise entre 0,5 et 6 bar absolus. D'une manière avantageuse, la pression est comprise entre 0,8 et 3 bar absolus.

D'une façon avantageuse, la pression à laquelle est mise en oeuvre le traitement est voisine de la pression atmosphérique.

La température d'entrée des gaz lors de cette étape est comprise entre 80 et 350°C et dépend du moyen de chauffage mis en oeuvre.

Le chauffage du milieu, durant le préchauffage de l'APV ou pendant l'introduction de la vapeur d'eau, peut être réalisé par tout moyen connu.

Ainsi, on peut mettre en oeuvre un chauffage du type conductif, en utilisant un appareil comprenant une double enveloppe. On peut de même mettre en oeuvre un chauffage du type convectif au moyen d'un gaz chaud qui sera de manière avantageuse l'atmosphère sous laquelle est réalisée le traitement. On peut de même combiner ces deux moyens de chauffage.

Selon une variante particulièrement avantageuse de la présente invention, on peut effectuer une seconde étape consistant à soumettre l'APV résultant à un traitement thermique supplémentaire destiné essentiellement à éliminer l'eau présente dans l'APV à la suite de la première étape. Il est à noter que cette opération permet par ailleurs d'éliminer encore quelques traces de solvants.

Cette opération de séchage conventionnel peut être effectuée par tout moyen connu de l'homme du métier. Ainsi, on peut mettre en oeuvre un séchage conductif sous vide ou à pression atmosphérique. On peut de même réaliser cette étape par un séchage convectif au moyen d'un gaz chaud. Ce gaz chaud peut être choisi parmi la vapeur d'eau surchauffée et/ou tout autre gaz inerte vis-à-vis de l'APV.

Cette opération peut être effectuée en lit fluidisé ou traversé.

On peut enfin envisager de combiner les deux types précités de séchage.

Ainsi que cela a été indiqué auparavant, le procédé de séchage selon l'invention permet de diminuer les teneurs en solvants, l'alcool et l'ester, présents dans l'APV sans constater de dégradation de la qualité de l'APV.

Ainsi, l'APV obtenu selon le procédé de l'invention présente une teneur en alcool inférieure à 1 % en poids par rapport au poids d'APV humide, ainsi qu'une teneur en ester inférieure à 1 % par rapport à la même référence. Plus particulièrement l'alcool est le méthanol, l'ester est l'acétate de méthyle.

De manière particulièrement avantageuse, la présente invention permet d'obtenir un APV présentant une teneur en alcool inférieure à 0,5 % en poids par rapport au poids d'APV humide. Elle permet d'obtenir par ailleurs, de manière avantageuse, un APV avec une teneur en ester inférieure à 0,5 %.

Il est à noter que selon la qualité de l'APV traité, c'est-à-dire notamment, selon son degré de séchage préalable au traitement de l'invention, le rapport, exprimé en poids, d'alcool à l'ester est compris entre 1 et 20. Plus particulièrement, ledit rapport est compris entre 1 et 10, et de préférence compris entre 1 et 5.

La présente invention a pour objet un alcool polyvinylique se présentant sous la forme d'écaille dont les côtés mesurent au plus 10 mm et présentant une teneur en alcool, et plus particulièrement en méthanol, inférieure à 1 % et une teneur en ester, et plus particulièrement en acétate de méthyle, inférieure à 1%, ces valeurs étant exprimées en poids par rapport à l'APV humide.

Les écailles d'APV sont plus particulièrement issues du procédé de synthèse de l'APV en continu et ont fait l'objet du traitement de séchage selon l'invention.

Les dimensions des côtés sont plus particulièrement supérieures à 1 mm et d'au plus 10 mm. De préférence, la dimension des côtés est comprise entre 2 et 5 mm. L'épaisseur des écailles est de l'ordre de 0,05 à 0,3 mm, de préférence de l'ordre de 0,1 à 0,2 mm.

La présente invention a enfin pour objet un alcool polyvinylique dont la granulométrie moyenne est avantageusement supérieure à 600 µm et présentant une teneur en alcool, et plus particulièrement en méthanol, inférieure à 1 % et une teneur en ester, et plus particulièrement en acétate de méthyle, inférieure à 1 %, ces valeurs étant exprimées en poids par rapport à l'APV humide.

Plus particulièrement l'APV selon l'invention présente une granulométrie moyenne comprise entre 600 et 1000 µm, de préférence la granulométrie moyenne est comprise entre 700 et 900 µm.

Il est à noter que l'APV décrit ci-dessus peut notamment être obtenu en broyant, par tous moyens connus de l'homme du métier, des écailles d'APV qui ont été décrites préalablement.

Selon une variante avantageuse de l'invention, l'APV, qu'il soit sous forme d'écailles ou sous forme d'une poudre dont la granulométrie est supérieure à 600 µm, présente une teneur en méthanol inférieure à 0,5%, et une teneur en acétate de méthyle inférieure à 0,5 %, teneurs exprimées en poids par rapport au poids d'APV humide.

Ce qui a été dit auparavant à propos de l'alcool polyvinylique, et notamment sur le taux d'alcoolyse reste valable.

De plus l'APV selon l'invention présente une coloration proche de celle du produit issu de la synthèse.

Des exemples non limitatifs de la présente invention vont maintenant être présentés.

### EXEMPLE 1

Cet exemple illustre un procédé de purification de l'APV en deux étapes successives ; la première étant réalisée en présence de vapeur d'eau diluée.

L'appareillage dans lequel est effectué le traitement selon l'invention (turbosphère Moritz®), comprend une cuve arrondie de capacité utile maximale de 6 litres, chauffée extérieurement par une double enveloppe parcourue par de la vapeur d'eau à 130°C.

Elle est munie d'un moyen d'agitation épousant, pour la majeure partie du volume utile, la forme de la cuve, communiquant aux écailles d'APV un mouvement de brassage important.

Par le couvercle supérieur, l'azote et la vapeur d'eau peuvent être introduits avec des débits contrôlés.

Les analyses des teneurs en méthanol et en acétate de méthyle sont faites par chromatographie "head space".

La détermination de la teneur en eau est faite au moyen d'un appareil Karl-Fischer Metrohm® avec four.

1489 g d'écailles d'APV comprenant 28 % de méthanol et 30,4 % d'acétate de méthyle sont chargées dans l'appareil chauffé décrit ci-dessus.

Le débit de la vapeur d'eau à la pression atmosphérique est de 420 g/h et le débit d'azote est de 190 g/h.

Le titre massique en eau de l'atmosphère est donc de 69% pour une température voisine de 95°C.

Le nombre de Froude est de 1,4.

La pression est de 1020 mbar.

La température du polymère évolue d'un palier initial vers 80°C jusqu'à 107°C après une heure d'introduction de vapeur et d'azote.

Après une heure de traitement, le produit est séché, dans une seconde étape, par conduction à travers les parois de l'appareil. Le flux d'azote est maintenu au même débit que précédemment.

L'opération est conduite pendant une heure.

La pression est de 1020 mbar.

A l'issue de l'étape de séchage, le produit se présente sous la forme d'écailles individuelles et cassantes, de couleur ivoire très clair.

Le produit a été broyé à 800 µm et présente les mêmes teneurs en méthanol, en acétate de méthyle et en eau que les écailles.

Les résultats sont rassemblés dans le tableau ci-dessous :

| • **temps (minutes)** | **méthanol (% poids)** | **acétate de méthyle (% poids)** | **eau (% poids)** |
|---|---|---|---|
| 0 | 28 | 30,4 | - |
| 60 | 0,65 | 0,76 | 4,5 |
| 120 | 0,39 | 0,75 | 0,95 |

Les teneurs en % en poids sont exprimés par rapport au poids d'APV humide.

### EXEMPLE 2

Cet exemple illustre un procédé de traitement de l'APV en deux étapes successives dont la première est effectuée en présence de vapeur d'eau pure légèrement surchauffée.

On effectue le traitement dans le même appareil que celui décrit à l'exemple 1.

1500 g d'APV comprenant 16,2% de méthanol et 1,4 % d'acétate de méthyle sont introduits dans l'appareil chauffé.

La vapeur d'eau pure (titre massique en eau de 100 %) est introduite avec un débit de 1600 g/h, à une température voisine de 102°C, pendant 40 minutes.

L'opération est réalisée sous une pression de 1020 mbar.

Le nombre de Froude est de 2,1.

L'appareil est ensuite mis sous un vide de 100 mbar pendant une heure.

La température du produit évolue de 85 à 107°C lors du traitement à la vapeur d'eau pour atteindre 105 °C en fin de séchage.

Les résultats obtenus sont rassemblés dans le tableau suivant :

| **temps (minutes)** | **méthanol (% poids)** | **acétate de méthyle (% poids)** | **eau (% poids)** |
|---|---|---|---|
| 0 | 16,2 | 1,4 | - |
| 30 | 0,4 | 0,07 | 10,2 |
| 40 | 0,08 | 0,01 | 12,8 |
| 100 | 0,03 | 0,03 | 0,32 |

On constate que dès 30 minutes, le traitement avec la vapeur d'eau permet d'atteindre une teneur en méthanol et en acétate de méthyle inférieure à 0,5 %. Malgré la teneur de 12,8 % en eau avant de commencer l'étape de séchage, l'APV à l'issue du procédé selon l'invention se présente sous la forme de particules individuelles et sèches.

Le produit final est constitué d'écailles individuelles de couleur ivoire très clair.

Le produit a été broyé à 800 µm et présente les mêmes teneurs en méthanol, en acétate de méthyle et en eau que les écailles.

### EXEMPLE 3

Cet exemple illustre un procédé en une seule étape en présence de vapeur d'eau diluée.

881 g d'APV titrant 5,1 % en méthanol et 0,73 % en acétate de méthyle sont introduits dans l'appareil chaud décrit à l'exemple 1.

Un mélange de gaz, présentant un titre massique en eau de 69 % et comprenant 190 g/h d'azote et 420 g/h de vapeur d'eau, est introduit à la pression atmosphérique et à une température de l'ordre de 95 °C, pendant 3 heures.

La température du produit atteint 112°C en fin d'étape.

Le nombre de Froude est de 2,1.

Les résultats sont rassemblés dans le tableau ci-dessous :

| **temps (minutes)** | **méthanol (% poids)** | **acétate de méthyle (% poids)** | **eau (% poids)** |
|---|---|---|---|
| 0 | 5,1 | 0,73 | - |
| 30 | 1,46 | 0,46 | - |
| 60 | 0,55 | 0,27 | 2 |
| 90 | 0,42 | 0,28 | |
| 120 | 0,29 | 0,22 | 1,9 |
| 180 | 0,18 | 0,20 | 1,8 |

Le produit se présente sous la forme d'écailles sèches, cassantes et conserve sa coloration initiale.

Le produit a été broyé à 800 µm et présente les mêmes teneurs en méthanol, en acétate de méthyle et en eau que les écailles.

### EXEMPLE 4 COMPARATIF

Cet exemple consiste à effectuer un traitement en présence de vapeur d'eau sous pression réduite.

962 g d'APV comprenant 5,1 % de méthanol et 2,1 % d'acétate de méthyle sont chargés dans l'appareil chaud décrit à l'exemple 1.

De la vapeur d'eau est introduite avec un débit de 300g/h, vers une température de 102°C (titre massique de 100 %) à une pression de 300 mbar absolus pendant 95 minutes.

Le nombre de Froude est de 2,1.

La température du produit évolue de 105°C, pour atteindre une valeur stable de 114°C.

Le tableau suivant rassemble les résultats obtenus :

| **temps (minutes)** | **méthanol (% poids)** | **acétate de méthyle (% poids)** | **eau (% poids)** |
|---|---|---|---|
| 0 | 5,1 | 2,1 | - |
| 5 | 4,48 | 2,02 | 1,96 |
| 65 | 1,44 | 1,49 | 0,64 |
| 95 | 1,12 | 1,47 | 0,48 |

Malgré un traitement à la vapeur durant 95 minutes, les teneurs résiduelles en ces deux solvants sont supérieures à 1 %, lorsque l'on opère dans de telles conditions, c'est à dire sous pression de vapeur d'eau trop faible.

Les écailles obtenues sont sèches et cassantes.

Le produit a été broyé à 800 µm et présente les mêmes teneurs en méthanol, en acétate de méthyle et en eau que les écailles.

### EXEMPLE 5 COMPARATIF

Cet exemple a pour objet un séchage du type conventionnel, c'est-à-dire sans vapeur d'eau.

1538 g d'APV comprenant 28 % de méthanol et 30,4 % d'acétate de méthyle sont chargés dans l'appareil chaud.

190 g/h d'azote (titre massique en eau de 0) sous pression atmosphérique (1020 mbar) sont utilisés pendant tout l'essai.

Le nombre de Froude est de 1,4.

La température du produit évolue de 82°C à 110°C.

Le tableau suivant rassemble les résultats obtenus :

| **temps (minutes)** | **méthanol (% poids)** | **acétate de méthyle (% poids)** |
|---|---|---|
| 0 | 28 | 30,4 |
| 30 | 10,35 | 2,64 |
| 60 | 3,05 | 2,54 |
| 120 | 1,39 | 2,43 |

On constate que malgré une durée de traitement de 2 heures, les teneurs en méthanol et en acétate de méthyle restent supérieures à 1 %.

Le produit a été broyé à 800 µm et présente les mêmes teneurs en méthanol, en acétate de méthyle et en eau que les écailles.

Par ailleurs, et contrairement à ce que l'on observe lorsque l'on met en oeuvre le procédé selon l'invention, on note une variation de la coloration de l'APV traité, qui est passée de l'ivoire clair au jaune ambré.

## Revendications

1. Procédé de purification d'alcool polyvinylique (APV) obtenu par réaction d'un ester polyvinylique avec un alcool, en particulier le méthanol, avec libération d'un ester, en particulier l'acétate de méthyle, ledit procédé de purification étant destiné à préparer un alcool polyvinylique contenant une teneur en alcool, en particulier en méthanol, inférieure à 1 % et une teneur en ester, en particulier en acétate de méthyle, inférieure à 1 %, ces valeurs étant exprimées en pourcentages en poids par rapport à l'APV humide, caractérisé en ce que l'on soumet ledit alcool à un traitement thermique sous agitation et sous une atmosphère non saturée en eau et présentant un titre massique en vapeur d'eau compris entre 20 et 100 %, et en ce que l'on effectue le traitement à une pression d'au moins 0,5 bar absolus.

2. Procédé selon la revendication 1, caractérisé en ce que l'on effectue le traitement avec une atmosphère présentant un titre massique en vapeur d'eau compris entre 40 et 100 % et de préférence compris entre 60 et 100 %.

3. Procédé selon l'une des revendications 1 ou 2, caractérisé en ce que l'on effectue le traitement sous une atmosphère comprenant en outre un gaz diluant.

4. Procédé selon la revendication 3, caractérisé en ce que l'on choisit le gaz diluant parmi l'azote, l'air ou tout autre gaz inerte vis-à-vis de l'APV dans les conditions de traitement.

5. Procédé selon l'une quelconque des revendications 1 ou 2, caractérisé en ce que l'on effectue le traitement sous une atmosphère de vapeur d'eau pure surchauffée.

6. Procédé selon l'une quelconque des revendications 1 à 5, caractérisé en ce que l'on effectue le traitement avec une température d'entrée des gaz comprise entre 80 et 350°C.

7. Procédé selon l'une quelconque des revendications 1 à 6, caractérisé en ce que l'on effectue le traitement avec un alcool polyvinylique présentant, au début du traitement, une température voisine du point de rosée de l'atmosphère de traitement.

8. Procédé selon l'une quelconque des revendications 1 à 7, caractérisé en ce que l'on effectue le traitement avec une quantité de vapeur d'eau entrant en contact avec l'APV pendant le traitement, comprise entre 0,2 et 0,8 kg par kilogramme d'APV sec.

9. Procédé selon l'une quelconque des revendications 1 à 8, caractérisé en ce que l'on effectue le traitement à une pression comprise entre 0.5 et 6 bar absolus, de préférence entre 0,8 et 3 bar absolus.

10. Procédé selon l'une quelconque des revendications 1 à 9, caractérisé en ce que l'on effectue une seconde étape consistant à soumettre l'APV résultant à un traitement thermique supplémentaire de séchage.

11. Alcool polyvinylique susceptible d'être obtenu selon le procédé défini dans l'une des revendications 1 à 10, se présentant sous forme d'écailles dont les côtés mesurent au plus 10 mm, et présentant des teneurs en alcool, plus particulièrement en méthanol, inférieures à 1 % et en ester, plus particulièrement en acétate de méthyle, inférieures à 1 %, ces valeurs étant exprimées en poids par rapport à l'APV humide.

12. Alcool polyvinylique susceptible d'être obtenu selon le procédé défini dans l'une des revendications 1 à 10, présentant une granulométrie moyenne supérieure à 600 µm et une teneur en alcool, plus particulièrement en méthanol, inférieure à 1 % et une teneur en ester, plus particulièrement en acétate de méthyle, inférieure à 1 %, ces valeurs étant exprimées en poids par rapport à l'APV humide.

13. Alcool polyvinylique selon l'une quelconque des revendications 11 ou 12, caractérisé en ce que la teneur en alcool, plus particulièrement en méthanol, est inférieure à 0,5 % et la teneur en ester, plus particulièrement en acétate de méthyle, inférieure à 0,5 %, ces valeurs étant exprimées en poids par rapport à l'APV humide.

## Patentansprüche

1. Verfahren zur Reinigung von Polyvinylalkohol (PVA), der durch Umsetzung eines Polyvinylesters mit einem Alkohol, insbesondere Methanol, unter Freisetzung eines Esters, insbesondere von Methylacetat, hergestellt worden ist, wobei das genannte Reinigungsverfahren dazu dient, einen Polyvinylalkohol herzustellen, der weniger als 1 % Alkohol, insbesondere Methanol, und weniger als 1 % Ester, insbesondere Methylacetat, enthält, wobei diese Werte ausgedrückt sind in Gew.-%, bezogen auf den feuchten PVA, dadurch gekennzeichnet, daß man den genannten Alkohol einer thermischen Behandlung unterzieht unter Rühren und unter einer Atmosphäre, die nicht an Wasser gesättigt ist und einen Massengehalt an Wasserdampf zwischen 20 und 100 % aufweist, und daß man die Behandlung bei einem Druck von mindestens 0,5 bar abs. durchführt.

2. Verfahren nach Anspruch 1, dadurch gekennzeichnet, daß man die Behandlung mit einer Atmosphäre durchführt, die einen Massengehalt an Wasserdampf zwischen 40 und 100 %, vorzugsweise zwischen 60 und 100 %, aufweist.

3. Verfahren nach einem der Ansprüche 1 oder 2, dadurch gekennzeichnet, daß man die Behandlung unter einer Atmosphäre durchführt, die außerdem ein Verdünnungsgas enthält.

4. Verfahren nach Anspruch 3, dadurch gekennzeichnet, daß man das Verdünnungsgas auswählt aus der Gruppe Stickstoff, Luft oder irgendeinem anderen Gas, das gegenüber PVA unter den Behandlungs-Bedingungen inert ist.

5. Verfahren nach einem der Ansprüche 1 oder 2, dadurch gekennzeichnet, daß man die Behandlung unter einer Atmosphäre von überhitztem reinem Wasserdampf durchführt.

6. Verfahren nach einem der Ansprüche 1 bis 5, dadurch gekennzeichnet, daß man die Behandlung mit einer Gaseintritts-Temperatur zwischen 80 und 350°C durchführt.

7. Verfahren nach einem der Ansprüche 1 bis 6, dadurch gekennzeichnet, daß man die Behandlung mit einem Polyvinylalkohol durchführt, der zu Beginn der Behandlung eine Temperatur in der Nähe des Taupunktes der Behandlungsatmosphäre aufweist.

8. Verfahren nach einem der Ansprüche 1 bis 7, dadurch gekennzeichnet, daß man die Behandlung mit einer Wasserdampfmenge durchführt, die mit dem PVA während der Behandlung in Kontakt kommt, die zwischen 0,2 und 0,8 kg pro kg trockenem PVA liegt.

9. Verfahren nach einem der Ansprüche 1 bis 8, dadurch gekennzeichnet, daß man die Behandlung bei einem Druck zwischen 0,5 und 6 bar abs., vorzugsweise zwischen 0,8 und 3 bar abs., durchführt.

10. Verfahren nach einem der Ansprüche 1 bis 9, dadurch gekennzeichnet, daß man eine zweite Stufe durchführt, die darin besteht, daß man den resultierenden PVA einer zusätzlichen thermischen Trocknungsbehandlung unterwirft.

11. Polyvinylalkohol, wie er nach dem Verfahren nach einem der Ansprüche 1 bis 10 erhältlich ist, der in Form von Schuppen mit Seitenlängen von höchstens 10 mm vorliegt und Gehalte an Alkohol, insbesondere an Methanol, von weniger als 1 % und an Ester, insbesondere an Methylacetat, von weniger als 1 % aufweist, wobei diese Werte ausgedrückt sind in Gew.-%, bezogen auf den feuchten PVA.

12. Polyvinylalkohol, der nach dem Verfahren nach einem der Ansprüche 1 bis 10 erhalten werden kann, der eine mittlere Teilchengröße von mehr als 600 µm und einen Gehalt an Alkohol, insbesondere an Methanol, von weniger als 1 % und einen Gehalt an Ester, insbesondere an Methylacetat, von weniger als 1 % aufweist, wobei diese Werte ausgedrückt sind in Gew.-%, bezogen auf den feuchten PVA.

13. Polyvinylalkohol nach einem der Ansprüche 11 oder 12, dadurch gekennzeichnet, daß der Gehalt an Alkohol, insbesondere an Methanol, unter 0,5 % liegt und daß der Gehalt an Ester, insbesondere an Methylacetat, unter 0,5 % liegt, wobei diese Werte ausgedrückt sind in Gew.-%, bezogen auf den feuchten PVA.

## Claims

1. A process of purification of poly(vinyl alcohol) (PVA) obtained by reaction of a poly(vinyl ester) with an alcohol, methanol in particular, with release of an ester, methyl acetate in particular, said process of purification being intended for preparing a poly(vinyl alcohol) having an alcohol content, a methanol content in particular, of less than 1 %, and an ester content, a methyl acetate content in particular, of less than 1 %, these values being expressed in percentages by weight with respect to the moist PVA, characterised in that said alcohol is subjected to a heat treatment with agitation, under an atmosphere which is unsaturated by water and which has a water vapour weight content of between 20 and 100 %, and in that the treatment is carried out at a pressure of at least 0.5 absolute bar.

2. The process according to claim 1, characterised in that the treatment is carried out with an atmosphere having a water vapour weight content of between 40 and 100% and preferably of between 60 and 100 %.

3. The process according to one of claims 1 or 2, characterised in that the treatment is carried out under an atmosphere further comprising a diluting gas.

4. The process according to claim 3, characterised in that the diluting gas is selected from nitrogen, air or any other gas inert towards PVA under the treatment conditions.

5. The process according to any one of claims 1 or 2, characterised in that the treatment is carried out under an atmosphere of superheated pure water vapour.

6. The process according to any one of claims 1 to 5, characterised in that the treatment is carried out with a gas inlet temperature of between 80 and 350°C.

7. The process according to any one of claims 1 to 6, characterised in that the treatment is carried out with a poly(vinyl alcohol) having. at the start of treatment, a temperature around the dew point of the treatment atmosphere.

8. The process according to any one of claims 1 to 7, characterised in that the treatment is carried out with an amount of water vapour coming into contact with the PVA during the treatment of between 0.2 and 0.8 kg per kilogram of dry PVA.

9. The process according to any one of claims 1 to 8, characterised in that the treatment is carried out at a pressure of between 0.5 and 6 absolute bar, preferably of between 0.8 and 3 absolute bar.

10. The process according to any one of claims 1 to 9, characterised in that a second step is carried out which consists in subjecting the resulting PVA to an additional heat drying treatment.

11. Poly(vinyl alcohol) obtainable according to the process defined in one of claims 1 to 10, being in the form of flakes the sides of which measure at the most 10 mm, and having alcohol contents, more particularly methanol contents, of less than 1 %, and ester contents, more particularly methyl acetate contents, of less than 1 %, these values being expressed by weight with respect to the moist PVA.

12. Poly(vinyl alcohol) obtainable according to the process defined in one of claims 1 to 10, having an average particle size of greater than 600 µm and an alcohol content, more particularly a methanol content, of less than 1 %, and an ester content, more particularly a methyl acetate content, of less than 1 %, these values being expressed by weight with respect to the moist PVA.

13. The poly(vinyl alcohol) according to any one of claims 11 or 12, characterised in that the alcohol content, more particularly the methanol content, is less than 0.5%, and the ester content, more particularly the methyl acetate content, is less than 0.5%, these values being expressed by weight with respect to the moist PVA.
